# FASCICULE DE BREVET EUROPEEN

(11) **EP 0 476 026 B1**
(45) Date de publication et mention de la délivrance du brevet: **20.07.1994**
(21) Numéro de dépôt: 90909459.1
(22) Date de dépôt: 14.06.1990
(51) Int. Cl.: G07G 1/00, G07F 7/02, G08B 13/24, G06K 7/00

(54) **PROCEDE ET DISPOSITIF DE COMPTABILISATION ET DE CONTROLE D'ARTICLES**
VERFAHREN UND VORRICHTUNG ZUR ABRECHNUNG UND NACHPRÜFUNG VON GEGENSTÄNDEN
PROCESS AND DEVICE FOR REGISTERING AND CHECKING ITEMS

(30) Priorité: 14.06.1989 FR 8907888
(43) Date de publication de la demande: 25.03.1992
(73) Titulaire: RAIMBAULT, Pierre, F-75017 Paris (FR)
(72) Inventeur: RAIMBAULT, Pierre, F-75017 Paris (FR)
(74) Mandataire: Fort, Jacques
(86) Numéro de dépôt international: FR9000423
(87) Numéro de publication internationale: WO9016051

(56) Documents cités:
- EP-A- 0 241 148
- WO-A-86/04171
- FR-A- 1 598 252
- FR-A- 2 325 251
- FR-A- 2 555 339
- US-A- 3 849 633
- US-A- 3 896 372
- US-A- 4 071 740
- US-A- 4 373 133

## Description

L'invention concerne les procédés et dispositifs de comptabilisation (ce terme étant à interpréter comme désignant la prise en compte et la totalisation du prix d'articles achetés) et de contrôle d'articles et elle trouve une application particulièrement importante, bien que non exclusive, dans les magasins de grande distribution fonctionnant en libre service.

A l'heure actuelle, un reproche majeur fait par les chalands aux grands magasins de ce type est la durée d'attente aux caisses, nécessitée par le contrôle un à un des articles achetés, l'enregistrement et le paiement. L'utilisation de dispositifs à balayage de lecture optique de codes à barres portés par chaque article apporte un gain de temps en évitant à la caissière la saisie individuelle du code ou du prix de chaque article sur une machine comptable. Cette solution n'est cependant qu'un palliatif car, du fait de la vérification individuelle de chaque article par un employé, le temps de passage de chaque client à une caisse est pratiquement proportionnel au nombre d'articles achetés, le temps d'encaissement représentant en général une fraction faible de la durée de séjour à une caisse. La prise en compte nécessite en effet le dépôt sur un tapis de tous les articles, leur vérification individuelle, puis leur rechargement.

Une autre source de mécontentement est la quasi-impossibilité pour le chaland de contrôler que le prix effectivement comptabilisé est bien celui qu'il a relevé sur le rayon. Enfin, une réticence du client est le fait qu'il ne peut évaluer que très approximativement le montant qu'il aura à payer jusqu'au moment où le total s'affiche à la caisse.

On connaît déjà un procédé et un dispositif conformes au préambule des revendications 1 et 3, respectivement (FR-A-2 555 339).

On a proposé (US-A-4 373 133) un procédé consistant à munir chaque réceptacle de client d'un lecteur de codes à barres et d'un totalisateur. La vérification effectuée aux caisses est très sommaire et facilite la fraude, puisqu'elle consiste à vérifier que le poids total des articles achetés correspond à ce qu'il devrait être d'après les codes barres lus.

On connaît par ailleurs (FR-A- 1 598 252) une étiquette destinée au tri automatique d'objets, capable de fournir un signal haute fréquence en réponse à un signal d'interrogation haute fréquence. On connaît également (WO-A-86/04171) un système d'identification d'étiquette portable fournissant un champ électrique codé lorsqu'elle reçoit de l'énergie par voie magnétique.

L'invention vise à fournir un procédé et un dispositif répondant mieux que ceux antérieurement connus aux exigences de la pratique, notamment en ce qu'ils écartent les défauts ci-dessus ou au moins les atténuent.

Dans ce but, l'invention propose notamment un procédé suivant la revendication 1 et un dispositif suivant la revendication 5.

Le temps nécessaire à l'interrogation de l'ensemble des articles peut être très réduit en mettant en oeuvre une séquence d'interrogations comportant des tests permettant chacun de déterminer s'il existe au moins un article dans un groupe donné (correspondant par exemple à la même valeur des bits de poids élevé de la signature), omettant l'interrogation portant sur tous les articles du groupe si le test revèle qu'il n'y en a aucun.

L'invention sera mieux comprise à la lecture de la description qui suit d'un mode particulier de réalisation, donné à titre d'exemple. La description se réfère aux dessins qui l'accompagnent, dans lesquels :
- la Figure 1 est un schéma de principe d'un dispositif dans lequel la prise en compte d'un article exige du chaland qu'il effectue une opération de lecture distincte du transfert de l'article d'un rayon à un réceptacle ;
- la Figure 2 est un synoptique de principe de l'électronique incluse dans le dispositif selon la Figure 1 ;
- la Figure 3 est un schéma de principe d'un dispositif selon un mode de réalisation de l'invention ;
- la Figure 4 est un logigramme montrant un exemple de séquence lors des opérations de comptabilisation qui interviennent lors du passage sous un portique dans le mode de réalisation de la Figure 3.

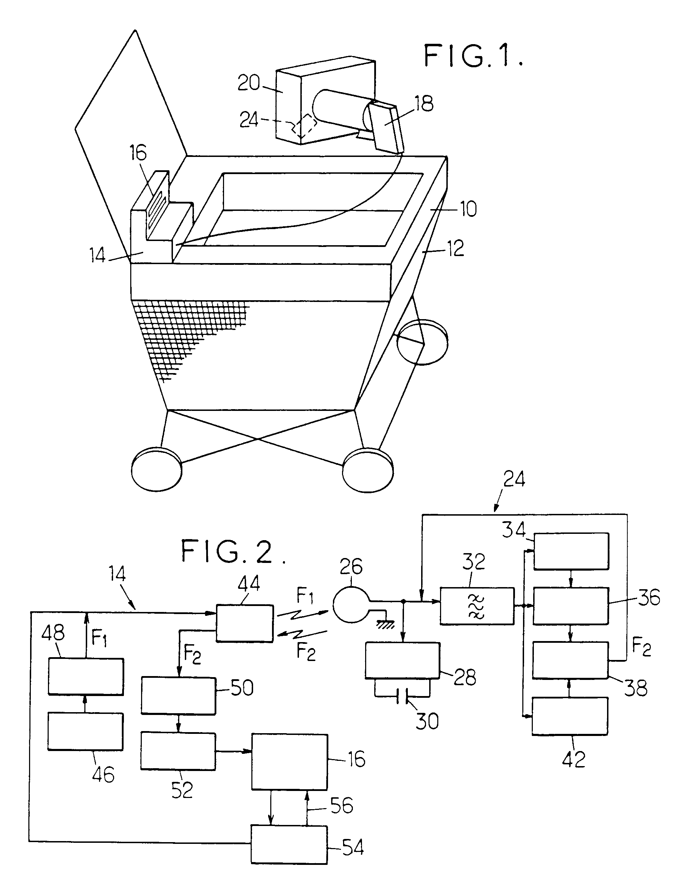

Un dispositif peut avoir la constitution matérielle de principe montrée en Figure 1. Ce dispositif est porté par un cadre 10 verrouillable sur le dessus d'un chariot 12, par exemple à l'aide d'une serrure permettant d'enlever le cadre 10 à la sortie des caisses lorsque le chaland souhaite pousser le chariot jusqu'à un véhicule parqué. Le cadre 10 porte un bloc électronique 14 muni d'un afficheur 16 et d'un lecteur 18.

Chacun des articles mis à la disposition des chalands contient une étiquette d'identification 24 inaccessible pour le chaland aussi longtemps que l'emballage est intact. Chacune des étiquettes 24 contient un microcircuit et est démunie de source autonome active d'énergie. Mais ce microcircuit comprend des moyens de collection d'énergie haute fréquence, des moyens d'émission d'une signature d'identification de l'article en réponse à la réception d'un code d'interrogation constitué par une modulation d'une porteuse à haute fréquence F1, et des moyens de stockage d'une énergie suffisante pour permettre le fonctionnement du microcircuit.

Dans le mode de réalisation montré en Figure 2, le microcircuit incorporé à chaque étiquette comporte une boucle d'alimentation 26 destinée à être placée dans un champ à haute fréquence F1. Cette boucle est généralement constituée par une piste en spirale. Elle est reliée à un circuit redresseur 28 de stockage d'énergie sur un condensateur 30. La boucle 26 sert aussi de capteur du code d'interrogation qui est le même pour tous les articles dans le mode de réalisation de la Figure 2.

Une branche de détection du code d'interrogation comporte un filtre passe-bande 32 destiné à isoler la fréquence F1 d'interrogation, un circuit de récupération d'horloge 34 et un circuit de décodage 36. Lorsque ce circuit identifie le code d'interrogation, il excite un circuit 38 d'émission de la signature de l'article, sous forme d'un signal à une haute fréquence F2, modulé en amplitude ou en fréquence. La signature est par exemple constituée par un mot de plusieurs bits. Le signal modulé à fréquence F2 est appliqué à la boucle qui sert alors d'antenne d'émission.

Le microcircuit comporte encore un organe de désactivation 42, capable d'inhiber le circuit d'émission de code 38 lorsque l'article qui contient le microcircuit a été pris en compte, comme on le verra plus loin.

L'électronique 14 comporte de son côté un transducteur 44 muni d'une antenne (non représentée) permettant de rayonner un champ à haute fréquence F1 et de fournir un signal lorsqu'elle est placée dans un champ à haute fréquence F2. L'électronique comporte une branche d'interrogation, constituée par une mémoire 46 de stockage du code d'interrogation et un générateur 48 d'un signal constitué par une porteuse à fréquence F1, pure ou modulée par le code d'interrogation 46. Une branche de réception comporte un circuit de décodage 50, généralement muni d'un filtre passe bande d'entrée centré sur la fréquence F2 et une mémoire morte programmable de transcodage 52 faisant correspondre, à chaque signature d'article, un prix et éventuellement une indication d'identification. La sortie de la mémoire morte est appliquée au circuit d'attaque de l'afficheur 16, muni de moyens de totalisation. Dans le mode de réalisation représenté, ce circuit d'attaque de l'afficheur est relié à un circuit de validation et d'inhibition 54 dont le rôle est :
- de provoquer la transmission, vers le microcircuit de l'article, d'un ordre d'inhibition excitant le circuit 42,
- d'émettre, vers les moyens de comptage de l'afficheur 16, un top de confirmation 56 lorsque le circuit d'émission 38 du microcircuit cesse d'émettre la signature, par suite de son inhibition.

L'émission de ce top de confirmation peut être indiquée au chaland par un signal sonore et/ou visuel.

Pour plus de simplicité, la Figure 2 ne montre pas l'alimentation en énergie des différents circuits non plus que les circuits classiques d'horloge et de synchronisation du bloc électronique 14.

Le fonctionnement du dispositif qui vient d'être décrit est le suivant.

Le chaland qui veut acheter un article doit, avant de le placer dans le chariot 12, le prendre en compte. Pour cela, il balaie soit une zone déterminée de l'article (dans le cas où l'emplacement de l'étiquette est visible de l'extérieur), soit l'ensemble de l'article à l'aide du lecteur 18, qui contient le transducteur 44. Un commutateur de mise en marche à bouton poussoir d'excitation du lecteur 18 peut être prévu afin d'éviter de le faire fonctionner en permanence. Le lecteur émet alors des séquences successives et séparées constituées chacune d'un train continu initial destiné à fournir l'énergie requise pour charger le condensateur 30 du microcircuit, puis un train modulé suivant un code d'interrogation.

Lorsque le microcircuit se trouve dans le champ d'émission et identifie l'interrogation, il répond en émettant, sur sa boucle 26 et pendant les silences séparant les séquences émises par le bloc électronique 14, un signal constitué par une porteuse à haute fréquence F2, différente de F1, modulée suivant une signature caractéristique de l'article. La signature décodée est transmise à la mémoire morte programmable de transcodage 52, qui peut être mise à jour périodiquement. La sortie de la mémoire fait apparaître, sur l'afficheur 16, le prix de l'article et éventuellement l'indication de sa nature.

Dès que la prise en compte est effective, le circuit d'attaque de l'afficheur excite le circuit d'inhibition 54 qui applique au transducteur 44 un signal destiné à inhiber le circuit d'émission 38 du microcircuit. L'ordre d'inhibition peut être transmis à la fréquence F1, notamment si l'interrogation a cessé. A réception de l'ordre d'inhibition, il n'y a plus envoi de signature par le microcircuit. Cette cessation est décelée par le circuit de décodage 50 (l'arrêt d'émission pouvant être remplacé par l'envoi d'un mot final d'indication d'inhibition). La constatation de l'inhibition provoque l'émission d'un ordre de confirmation de prise en compte de l'article par le circuit 54 et d'addition du prix de l'article au montant total déjà pris en compte.

Le dispositif est complété par des moyens de contrôle, situés à un emplacement où passent tous les articles achetés. Une solution consiste à prévoir un emplacement en amont de chacune des caisses de paiement. Cet emplacement peut être matérialisé par un portique sous lequel passe le réceptacle. Le portique (non représenté) contient une électronique d'émission de séquences identiques à celles fournies par le générateur 48 de chaque bloc électronique 14, mais fournit un champ électromagnétique beaucoup plus intense que les lecteurs, de façon à être capable d'exciter les microcircuits de tous les articles passant à l'emplacement de contrôle.

Si un ou plusieurs des microcircuits n'ont pas été inhibés, il y a émission de la signature correspondante. Les moyens de détection à l'emplacement délimité par le portique doivent être plus sensibles que ceux de chaque bloc électronique 14, étant donné que les transducteurs peuvent être éloignés des microcircuits.

Pour éviter d'endommager les microcircuits non inhibés lors de leur passage à l'emplacement de contrôle, où l'énergie reçue par la boucle 26 est dans certains cas beaucoup plus élevée que lors de la lecture normale, les moyens de stockage d'énergie 28 peuvent être munis de moyens de limitation de charge (non représentés). Dans la pratique, il suffit d'une capacité fournissant l'énergie nécessaire à l'émission d'un signal de quelques millisecondes.

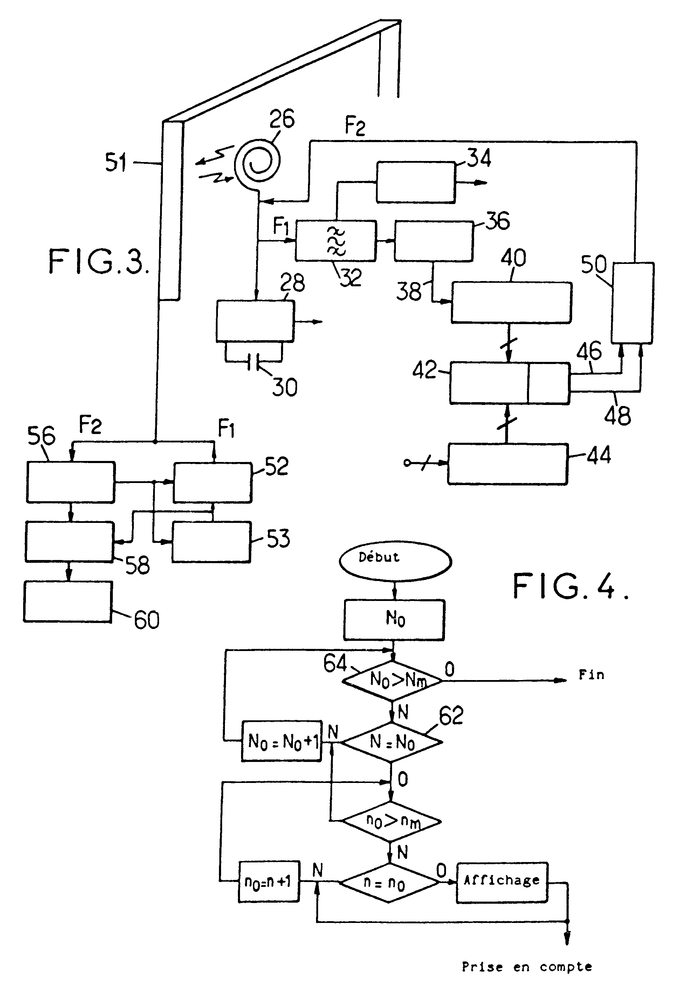

Dans le mode de réalisation de l'invention schématisé sur la Figure 3, le microcircuit contenu dans chaque article a des éléments similaires à ceux montrés en Figure 2 et qui, pour cette raison, sont désignés par le même numéro de référence. On trouve, dans le microcircuit de la Figure 3, une boucle d'alimentation 26 reliée à un redresseur 28 muni d'un condensateur de stockage d'énergie 30. Une branche de détection de code d'interrogation comporte un filtre passe-bande 32, un circuit de récupération d'horloge 34 et un circuit de décodage 36. Ce circuit est par exemple prévu pour fournir en série, sur sa sortie 38, les V bits d'un mot représentant la signature d'un article dont on cherche à déterminer la présence. Les bits successifs sont chargés dans un registre à décalage 40 relié à un comparateur 42 à V bits qui reçoit également la signature d'identification de l'article considéré, stockée à la fabrication dans une mémoire morte 44. De façon à rendre plus rapide la recherche des articles amenés à l'emplacement de lecture, le comparateur 42 est avantageusement prévu pour fournir un premier signal, sur une sortie 46, lorsqu'il y a coïncidence entre une fraction déterminée de la signature mémorisée en 44 et la fraction correspondante fournie par le décodeur 36 et un second signal, sur une sortie 48, en cas de coïncidence complète. Ces signaux sont appliqués à un générateur de fréquence F2 modulable pour appliquer, à la boucle 26, un signal différent suivant qu'il y a simplement constatation de l'identité de certains bits (Vₘ bits de poids fort par exemple) et un second signal en cas de coïncidence complète.

Si l'on suppose maintenant que l'emplacement de détection est matérialisé par un portique 51 placé immédiatement en amont des caisses, ce portique est associé à des moyens permettant d'identifier et de prendre en compte de façon séquentielle les différents articles placés par exemple dans un chariot amené sous le portique.

Le portique comporte un générateur de signal à fréquence F1 associé à un modulateur 53 permettant de coder des impulsions courtes à fréquence F1 par des codes d'interrogation correspondant aux signatures des articles susceptibles de se trouver sous le portique. Le générateur 52 est relié à une antenne contenue dans le portique. Cette antenne est également reliée à une voie de réception comportant un ensemble de filtrage à fréquence F2, de décodage et d'identification de messages de présence fournis par 50. Cet ensemble, désigné par 56 sur la Figure 3, commande, en cas de reconnaissance, la prise en compte de l'article identifié par des moyens comportant une table de transcodage (mémoire morte programmable 58 qui provoque la prise en compte du prix du produit et l'affichage des données correspondantes, par un afficheur 60). La signature identifiant le produit est appliquée à la table de transcodage 58 par 53.

Le dispositif est complété par des moyens de confirmation qui peuvent être du même genre que ceux montrés en Figure 2.

L'organigramme d'interrogation et de prise en compte peut être celui montré en Figure 4, dans un mode de réalisation relativement rudimentaire suivant lequel, chaque article étant désigné par une signature de V bits, dont Vₘ bits de poids fort représentant un nombre compris entre une valeur déterminée N₀ et une valeur maximale Nₘ et des bits de poids faible définissant un nombre compris entre n₀ et une valeur maximale nₘ :
- dans une première étape, on détermine s'il existe des articles dont la signature appartient au sous-groupe dont les bits de poids fort représentent un nombre déterminé, tous les nombres possibles N étant testés en succession,
- uniquement dans le cas où le test a révélé la présence d'un article au moins, tous les nombres représentables par les bits de poids faible sont interrogés à leur tour.

Au début de l'opération (Figure 4), un test 62 est effectué pour déterminer la présence d'articles dont les bits de poids forts représentent un nombre initial N₀ prédéterminé (qui peut être nul). Si le test donne un résultat négatif, N₀ est incrémenté d'une unité. Avant d'effectuer de nouveau le test 62, une vérification 64 que la nouvelle valeur N₀ ne dépasse pas le maximum Nₘ est effectuée : dans ce dernier cas, il est mis fin au processus.

Si le test indique qu'il y a au moins un article, une interrogation est faite pour chacun des nombres représentés par les bits de poids faible, par comparaison entre n et n₀ (d'abord une valeur initiale qui peut être nulle, puis des valeurs à incrémentées chaque fois d'une unité).

En cas de coïncidence complète, il y a affichage et prise en compte, puis retour au début de la boucle.

Dans un mode de réalisation plus élaboré, permettant de réduire le nombre d'essais infructueux, l'organigramme comporte un plus grand nombre de boucles. Le premier test est effectué uniquement sur le bit de poids le plus élevé. Puis les tests successifs sont effectués sur deux bits, trois bits, etc.

La durée d'une séquence d'identification d'un article peut être réduite à 10 ms environ, ce qui, même pour un très grand nombre d'articles, permet de réduire la durée de stationnement à l'emplacement de lecture à une seconde environ.

Le mode d'interrogation qui vient d'être décrit, utilisant une identification par modulation binaire en bande de base, est en défaut lorsque plusieurs articles identiques sont contenus dans le chariot. Cet inconvénient peut être écarté en étendant de 3 ou 4 chiffres le code article. Lors de la fabrication d'un lot (porté par une palette) tous les articles de ce lot reçoivent le même code article, mais on y ajoute un numéro d'extension différent (de 000 à 999 ou bien de 0000 à 9999).

Il est donc improbable que le chaland prenne sur le linéaire deux articles identiques ayant le même code d'extension. Il suffit ensuite de poursuivre en profondeur le "questionnaire" pour pouvoir dénombrer à coup sûr tous les articles.

Pour permettre au client de connaître le montant total de ses achats avant qu'il ne se présente aux caisses, des tunnels munis chacun d'un portique similaire à celui des caisses et d'un afficheur, voire même d'une imprimante, peuvent être réparties en divers emplacements du magasin.

Il suffit alors au client de passer avec son chariot dans un de ces tunnels pour connaître le montant total de ses achats.

## Revendications

1. Procédé de comptabilisation et de contrôle d'articles, suivant lequel on passe chaque article (20) portant un microcircuit (24) par un dispositif lecteur et compteur (52) qui détermine le prix de chaque article (20) ; on mémorise électroniquement le prix de l'article (20) ; on ajoute automatiquement le prix de l'article à celui des articles éventuellement pris antérieurement en compte ; on munit chaque microcircuit (24) d'un moyen de collecte d'énergie haute fréquence (26,28,30) ; on fait passer tous les articles (20) achetés par un emplacement (51) où règne un champ haute fréquence (F1) d'excitation et d'interrogation,
caractérisé en ce que le microcircuit est muni d'un moyen d'émission (26,50) qui émet en réponse un message haute fréquence modulé (F2) représentant une signature d'identification de l'article ; on excite le microcircuit (24) à un emplacement de passage où on établit le champ haute fréquence d'excitation et d'interrogation (F1) à l'aide duquel on émet des codes d'interrogation successifs de l'ensemble des articles possibles ; on capte le message modulé (F2) à l'aide de moyens à mémoire ; et on fait correspondre le prix de chaque article à sa signature (56,58).

2. Procédé selon la revendication 1, caractérisé en ce qu'on met en oeuvre une séquence d'interrogations comportant des tests permettant chacun de déterminer s'il existe au moins un article dans un groupe donné, omettant l'interrogation portant sur tous les articles du groupe si le test révèle qu'il n'y en a aucun.

3. Procédé selon la revendication 2, caractérisé en ce que chaque test consiste à déterminer s'il y a des articles dont la signature comporte des bits de poids élevé de valeur déterminée.

4. Procédé selon la revendication 3, caractérisé en ce que le premier test est effectué uniquement sur le bit de poids le plus élevé et les tests successifs sur deux bits, trois bits, etc...

5. Dispositif de comptabilisation et de contrôle d'articles contenant chacun un microcircuit (24) ayant des moyens de collecte d'énergie haute fréquence (26,28,30), le dispositif comportant un appareil de lecture et de comptage (52) qui détermine le prix de chaque article (20), le mémorise et ajoute le prix de l'article à celui des articles éventuellement pris antérieurement en compte, et qui comprend également des moyens d'émission de l'énergie haute fréquence d'interrogation (52),
caractérisé en ce que le microcircuit est muni d'un moyen (50) qui émet, en réponse à un code d'interrogation haute fréquence (F1), un message modulé représentant une signature d'identification de l'article (20), et en ce que l'appareil de lecture comprend un portique (51) qui délimite un emplacement où sont effectuées la détection de chaque article et la comptabilisation de l'ensemble des articles, qui comporte un générateur (52,53) de codes d'interrogation successifs (F1) correspondant aux signatures des articles susceptibles de se trouver sous le portique (51) et qui comporte des moyens à mémoire (56) pour capter le signal modulé de signature émis en réponse par le microcircuit (24) et lui fait correspondre le prix de l'article (56,58).

6. Dispositif selon la revendication 5, caractérisé en ce qu'il comprend des appareils de lecture répartis comprenant chacun un portique supplémentaire muni d'un afficheur indiquant le montant total des achats.

7. Dispositif selon la revendication 5 ou 6, caractérisé en ce que, la signature de chaque article étant constituée de bits de poids fort et de bits de poids faible, le dit générateur (52,53) et les moyens à mémoire sont prévus pour déterminer dans une première étape s'il existe des articles dont la signature appartient au groupe dont les bits de poids fort représentent un nombre déterminé et n'interroger à leur tour les nombres représentés par les bits de poids faible que s'il existe des articles du groupe.

8. Dispositif selon la revendication 5, 6 ou 7, caractérisé en ce que la signature comporte, en plus d'un code article commun à tous les articles identiques, un numéro d'extension variable.

## Claims

1. Method for entering into account and checking out articles, comprising the steps of circulating each article (20), which carries a microcircuit (24), through a read-out and counter device (52) which determines the price of each article (20); electronically storing the price of the article (20); automatically adding the price of the article to the price of articles possibly entered into account earlier; providing each microcircuit (24) with means for collecting high frequency energy (26,28,30); and circulating all purchased articles (20) through a location (51) where high frequency energization and interrogation field (F1) prevails,
characterized in that the microcircuit is provided with transmitting means (26,50) which, in response, transmits a modulated high frequency message (F2) which represents a signature which identifies the article; the microcircuit (24) is energized at a path location where the high frequency energization and interrogation field (F1), with which successive interrogation calls assigned to all possible articles are generated; the modulated message (F2) is collected with memory means; and the price of each article is derived from the signature thereof (56,58).

2. Method according to claim 1, characterized by carrying out a sequence of interrogations comprising tests each for determining whether there exists at least one article in a given group, omitting an interrogation relating to all articles of the group, if the test indicates there is none.

3. Method according to claim 2, characterized in that each test consists in determining whether there are articles whose signature comprises MSBs of predetermined value.

4. Method according to claim 3, characterized in that the first test is only carried out on the most significant bit and the successive test on two bits, three bits, etc.

5. A device for entering into account and checking out articles each containing a microcircuit which has means for collecting high frequency energy (26,28,30), the device comprising a read-out and counter unit (52) which identifies the price of each article (20), stores it and adds the price of the article to the price of the articles possibly taken into account earlier; and which further comprises means for transmitting high frequency interrogation energy (52),
characterized in that the microcircuit is provided with means (50) which transmit, responsive to the high frequency interrogation code (F1), a modulated message which represents a signature identifying the article (20) and in that the read-out unit comprises a gateway (51) which defines a location where each article is detected and all articles are taken into account, which comprises a generator (52, 53) of successive interrogation codes (F1) corresponding to the signatures of the articles possibly located under the gateway (51) and which comprises memory means (56) for picking up the modulated signature signal transmitted in response by the microciruit (24) and gives the corresponding article price (56,58).

6. Device according to claim 5, characterized in that it comprises distributed read-out units, each comprising an additional gateway provided with a display indicating the total purchased amount.

7. Device according claims 5 or 6, characterized in that, the signature of each article consisting of MSBs and LSBs, said generator (52,53) and the memory means are provided for determining, during a first step, whether there are articles whose signature belongs to the group whose MSBs represent a predetermined number and for trying the numbers represented by the LSBs only if there exist articles belonging to the group.

8. Device according claims 5, 6 or 7 characterized in that the signature comprises, in addition to an article code which is common to all articles which are identical, a variable extension number.

## Patentansprüche

1. Verfahren zur Buchung und zur Kontrolle von Waren, gemäß welchem jede eine Mikroschaltung (24) tragende Ware (20) durch eine Lese- und Registriereinrichtung (52) geführt wird, welche den Preis jeder Ware (20) bestimmt; der Preis der Ware (20) elektronisch gespeichert wird; der Preis der Ware zu demjenigen der ggf. vorher gebuchten Waren automatisch dazugeschlagen wird; jede Mikroschaltung (24) mit einem Hochfrequenzenergie-Sammelmittel (26, 28, 30) ausgestattet wird; alle gekauften Waren (20) durch eine Stelle (51) geführt werden, an welcher ein Anregungs- und Abfrage-Hochfrequenzfeld (F1) vorhanden ist,
dadurch gekennzeichnet, daß die Mikroschaltung ein Emissionsmittel (26, 50) aufweist, welches in Antwort eine einer Identifikationskennzeichnung der Ware entsprechende, modulierte Hochfrequenznachricht emittiert; die Mikroschaltung (24) an einer Durchgangsstelle angeregt wird, an welcher das Anregungs- und Abfrage-Hochfrequenzfeld (F1) erzeugt wird, mit dessen Hilfe aufeinanderfolgende Abfragecodes für die Gesamtheit der möglichen Waren emittiert werden; die modulierte Nachricht (F2) mit Hilfe von Speichermitteln aufgenommen wird; und der Preis jeder Ware ihrer Kennzeichnung zugeordnet wird (56, 58).

2. Verfahren nach Anspruch 1, dadurch gekennzeichnet, daß eine Tests umfassende Abfragesequenz durchgeführt wird, von denen jeder das Bestimmen ermöglicht, ob wenigstens eine Ware von einer gegebenen Gruppe vorhanden ist, wobei die sich auf alle Waren der Gruppe erstreckende Abfrage weggelassen wird, wenn der Test zeigt, daß es von dieser keine gibt.

3. Verfahren nach Anspruch 2, dadurch gekennzeichnet, daß jeder Test das Bestimmen umfaßt, ob es Waren gibt, deren Kennzeichnung höherwertige Bits mit bestimmtem Wert umfaßt.

4. Verfahren nach Anspruch 3, dadurch gekennzeichnet, daß der erste Test allein auf das höchstwertigste Bit und die folgenden Tests auf zwei Bits, drei Bits, usw. ... durchgeführt werden.

5. Vorrichtung zur Buchung und zur Kontrolle von jeweils eine Mikroschaltung (24) mit Hochfrequenzenergie-Sammelmitteln (26, 28, 30) aufweisenden Waren, wobei die Vorrichtung eine Lese- und Registriereinrichtung (52) umfaßt, welche den Preis jeder Ware (20) bestimmt, diesen speichert und den Preis der Ware zu demjenigen der ggf. vorher registrierten Waren dazuschlägt und welche ferner Anfrage-Hochfrequenzenergiemittel (52) umfaßt,
dadurch gekennzeichnet, daß die Mikroschaltung ein Mittel (50) aufweist, welches in Antwort auf einen Hochfrequenzabfragecode (F1) eine einer Identifikationskennzeichnung der Ware (20) entsprechende, modulierte Nachricht emittiert, und daß die Leseeinrichtung ein Tor (51) umfaßt, welches eine Stelle begrenzt, an der die Erfassung jeder Ware und die Buchung der Gesamtheit der Waren durchgeführt wird, welches einen Generator (52, 53) für aufeinanderfolgende Abfragecodes (F1) umfaßt, die den Kennzeichnungen der Waren zugeordnet sind, welche sich unter dem Tor (51) befinden können, und welches Speichermittel (56) zum Aufnehmen des in Antwort von der Mikroschaltung (24) emittierten, modulierten Kennzeichnungssignals umfaßt und diesem den Preis (56, 58) der Ware zuordnet.

6. Vorrichtung nach Anspruch 5, dadurch gekennzeichnet, daß sie verteilte Leseeinrichtungen umfaßt, welche jeweils ein zusätzliches Tor umfassen, welches eine den Gesamtbetrag der Einkäufe anzeigende Anzeigeeinrichtung aufweist.

7. Vorrichtung nach Anspruch 5 oder 6, dadurch gekennzeichnet, daß bei Bildung der Kennzeichnung jeder Ware aus hochwertigen Bits und aus niederwertigen Bits der Generator (52, 53) und die Speichermittel dazu vorgesehen sind, in einem ersten Schritt zu bestimmen, ob es Waren gibt, deren Kennzeichnung zu derjenigen Gruppe gehört, deren höherwertige Bits einer bestimmten Zahl entsprechen, und anschließend nur dann die den niederwertigen Bits entsprechenden Zahlen abzufragen, wenn es Waren der Gruppe gibt.

8. Vorrichtung nach Anspruch 5, 6 oder 7, dadurch gekennzeichnet, daß die Kennzeichnung zusätzlich zu einem allen identischen Waren gemeinsamen Warencode eine variable Erweiterungszahl umfaßt.
